# EUROPEAN PATENT APPLICATION

(11) **EP 2 568 364 A2**
(43) Date of publication of application: **13.03.2013**
(21) Application number: 12179923.3
(22) Date of filing: 09.08.2012
(51) Int. Cl.: G06F 3/042, G06F 3/044

(54) **Input device**

(30) Priority: 09.09.2011 JP 2011196755
(71) Applicant: Alps Electric Co., Ltd., Tokyo 145-8501 (JP)
(72) Inventor: Uenomachi, Takashi, Tokyo, Tokyo 145-8501 (JP); Shirasaka, Takeshi, Tokyo, Tokyo 145-8501 (JP)
(74) Representative: Klunker . Schmitt-Nilson . Hirsch

(57) **Abstract**

An input device (1, 40) includes an operation surface (3) configured to be operated by a finger (operating body) F; a capacitive sensor (10, 41, 52) disposed below an operation region 1a (including the operation surface), the capacitive sensor being capable of detecting an operation position of the finger; and a photosensor (20) having a light-emitting element (22) and a light-receiving element (23) disposed below the operation region, the photosensor being capable of obtaining detection information when the light-receiving element receives reflected light (IR2) corresponding to light (infrared light) (IR1) emitted from the light-emitting element toward the operation surface, the detection information indicating detection of the finger.

## Description

### BACKGROUND OF THE INVENTION

### 1. Field of the Invention

The present invention relates to an input device having a capacitive sensor and capable of detecting an operation position in an operation region.

### 2. Description of the Related Art

Japanese Unexamined Patent Application Publication No. 2007-311306 discloses an invention related to a vehicle-mounted input device. The vehicle-mounted input device includes a capacitive sensor on the back side of an operation surface. When the operation surface is operated by a finger, the capacitive sensor can detect the position of the finger on the basis of a change in capacitance.

However, for example, when the input device is operated while the vehicle is running, if the finger is accidentally moved off the operation surface by vibration of the vehicle body or the like during the operation, the capacitive sensor is unable to detect the finger which has been moved off the operation surface. When the capacitive sensor becomes unable to detect the finger, if, for example, the capacitive sensor resets the previous input state or determines that the input operation has been completed, the operator will be frustrated by the user-unfriendliness because the operator wants to continue the operation. In the related art, it is difficult to determine whether the finger has been moved off the operation surface by completion of the operation, or has been accidentally moved off the operation surface before completion of the operation. That is, in the related art, it is difficult to predict the motion after the finger is moved off the operation surface.

Additionally, for example, since the capacitive sensor is unable to detect the operation position of the finger in a glove, the operator has to take off the glove for the operation, which may be cumbersome for the operator.

Japanese Unexamined Patent Application Publication No. 2010-182201 discloses an input device having a three-dimensional operation surface. The input device disclosed in Japanese Unexamined Patent Application Publication No. 2010-182201 suffers problems similar to those described above.

### SUMMARY OF THE INVENTION

The present invention has been made to solve the problems of the related art described above. In particular, the present invention provides an input device having improved user-friendliness.

An input device according to an aspect of the present invention includes an operation region configured to be operated by an operating body; a capacitive sensor disposed below the operation region, the capacitive sensor being capable of detecting an operation position of the operating body; and a photosensor having a light-emitting element and a light-receiving element disposed below the operation region, the photosensor being capable of obtaining detection information when the light-receiving element receives reflected light corresponding to light emitted from the light-emitting element toward the operation region, the detection information indicating detection of the operating body.

In the aspect of the present invention, where the photosensor is used as well as the capacitive sensor, detection information can be obtained that would not be able to be obtained by the capacitive sensor alone. In the aspect of the present invention, detection information (indicating detection of the operation position of the operating body) from the photosensor can be used together with detection information from the capacitive sensor, or used in place of detection information from the capacitive sensor if no detection information can be obtained from the capacitive sensor. It is thus possible to provide improved user-friendliness, and achieve high accuracy in detecting the position of the operating body. For example, even if the operating body is accidentally moved off the operation region and the capacitive sensor is unable to detect the operating body, the photosensor can detect the operating body. The range of detection of the operating body can be widened, as compared to that with the configuration of the related art where only the capacitive sensor is used. Thus, it is possible to provide improved user-friendliness. For example, even if the operating body is accidentally moved off the operation region, detection information from the photosensor makes it possible to determine that the operation is still in progress. This can prevent termination of the current mode. For example, if detection information from the photosensor is used as a complement to detection information from the capacitive sensor, it is possible to correct the height coordinate (Z detection) of the operating body and achieve high accuracy in detecting the position of the operating body.

According to the aspect of the present invention, it is preferable that the operation region have an operation surface configured to be touched, operated from a short distance, or both; at least the light-emitting element be provided in plurality; and the photosensor be capable of detecting the operation position of the operating body above the operation surface. When the photosensor is capable of detecting the operation position of the operating body above the operation surface, even if, for example, the capacitive sensor is unable to detect the operating body, it is possible to properly detect the position of the operating body by using detection information from the photosensor. For example, if the operating body is in a glove, it is necessary to take off the glove in the related-art configuration that includes the capacitive sensor alone. In the aspect of the present invention, however, the photosensor can detect the operation position of the gloved operating body. It is thus possible to improve user-friendliness.

The input device according to the aspect of the present invention preferably further includes a panel unit including a light-transmissive sheet capable of transmitting light from the light-emitting elements and the reflected light, and electrodes constituting the capacitive sensor and disposed on one or both sides of the light-transmissive sheet. It is preferable that the operation surface serve as a front surface of the panel unit, and that the photosensor on a substrate be disposed in a lower part of the panel unit. Thus, the photosensor can properly emit and receive light through the light-transmissive sheet, and both the capacitive sensor and the photosensor can be disposed properly.

The input device according to the aspect of the present invention preferably further includes a light-transmissive resin layer capable of transmitting light from the light-emitting elements and the reflected light, the light-transmissive resin layer being molded on the light-transmissive sheet.

The input device according to the aspect of the present invention preferably further includes a decorative print layer capable of transmitting light from the light-emitting elements and the reflected light, the decorative print layer being formed on the light-transmissive sheet. With the decorative print layer, it is possible to illuminate various indications on the operation surface.

According to the aspect of the present invention, the electrodes constituting the capacitive sensor are preferably formed by printing on the light-transmissive sheet. Thus, after the electrodes are printed on the light-transmissive sheet in a planar state, three-dimensional forming can be properly applied to the panel unit.

According to the aspect of the present invention, the electrodes are preferably formed by lamination of a conductive print layer and a plating layer having resistivity lower than that of the conductive print layer. This makes it possible to reduce resistivity of the electrodes.

According to the aspect of the present invention, the operation surface may have a planar portion and a raised portion formed continuously from the planar portion, a recessed portion formed continuously from the planar portion, or both the raised portion and the recessed portion. Below the operation surface, the capacitive sensor may be formed along the contour of the planar portion and the raised portion, the recessed portion, or both the raised portion and the recessed portion. Thus, the operation position of the operating body can be properly detected not only when the operating body operates the planar portion, but also when the operating body operates the raised portion or the recessed portion.

According to the aspect of the present invention, a maximum detectable distance of the photosensor is preferably longer than that of the capacitive sensor, the maximum detectable distance being a maximum distance to which a point of operation on the operation surface can be detected. Thus, if the operating body is located beyond the maximum detectable distance of the capacitive sensor, the detection of motion of the operating body can be carried out on the basis of detection information from the photosensor.

According to the aspect of the present invention, it is preferable that predetermined information be displayed on the operation surface on the basis of detection information from the photosensor. For example, if the photosensor detects that the operating body distant from the operation surface has approached the operation surface by a predetermined distance, the predetermined information may be displayed on the operation surface. Thus, information can be displayed before the operating body touches the operation surface, and can continue to be displayed even after the operating body is moved off the operation surface. It is thus possible to improve user-friendliness.

According to the aspect of the present invention, detection information from the photosensor, the detection information indicating detection of the operating body, may be used as a complement when positional detection of the operating body is being carried out by the capacitive sensor. Although detection information from the capacitive sensor is mainly used, detection information from the photosensor can be used when detection information from the capacitive sensor cannot be obtained or when the coordinates (especially coordinate in the height direction) are to be corrected.

The input device according to the aspect of the present invention can provide improved user-friendliness.

### BRIEF DESCRIPTION OF THE DRAWINGS

Fig. 1 is a perspective view of a panel unit included in an input device according to an embodiment;
Fig. 2 is a see-through partial plan view illustrating a raised portion of an operation surface illustrated in Fig. 1 and a photosensor located below the raised portion;
Fig. 3 is a vertical cross-sectional view of the input device including the panel unit illustrated in Fig. 1;
Fig. 4 is a partial plan view for describing a photosensor arrangement different from that illustrated in Fig. 2;
Fig. 5 is a block diagram of the input device;
Fig. 6A and Fig. 6B illustrate motion detection performed when a finger (operating body) is approaching the input device, and operation indicators illuminated on the operation surface on the basis of the motion detection, Fig. 6A being a schematic side view of the input device and the finger, Fig. 6B being a plan view for describing a transition of the operation surface from a non-display state to a display state;
Fig. 7A is a schematic side view illustrating a state in which the operation surface is operated by a finger (operating body), and Fig. 7B is a schematic side view illustrating a state in which the finger in contact with the operation surface as in Fig. 7A is accidentally moved off the operation surface;
Fig. 8 schematically illustrates an operation of the input device;
Fig. 9 is a perspective view of a panel unit included in an input device according to an embodiment different from that of Fig. 1;
Fig. 10 is a vertical cross-sectional view of the input device including the panel unit illustrated in Fig. 9;
Fig. 11 is a partial cross-sectional view of a panel unit;
Fig. 12 is a partial cross-sectional view of another panel unit;
Fig. 13 is a partial cross-sectional view of another panel unit;
Fig. 14 is a partial cross-sectional view of another panel unit; and
Fig. 15 is a partial cross-sectional view of another panel unit.

### DESCRIPTION OF THE PREFERRED EMBODIMENTS

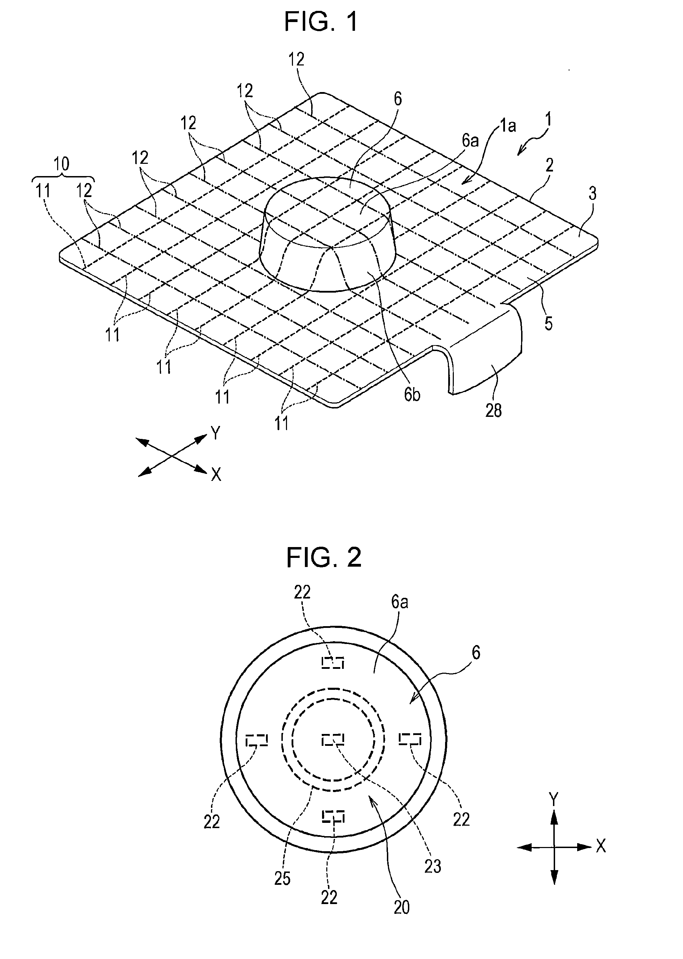

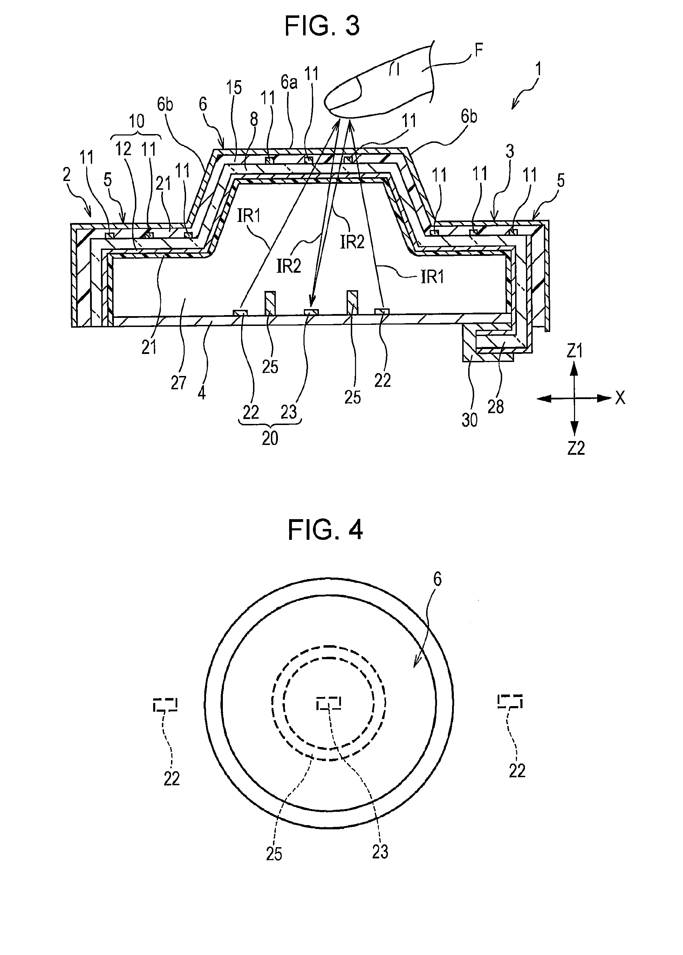

Fig. 1 is a perspective view of a panel unit included in an input device according to an embodiment. Fig. 2 is a see-through partial plan view illustrating a raised portion of an operation surface illustrated in Fig. 1 and a photosensor located below the raised portion. Fig. 3 is a vertical cross-sectional view of the input device including the panel unit illustrated in Fig. 1.

An input device 1 illustrated in Fig. 1 and Fig. 3 is used as a vehicle-mounted input device. For example, a panel unit 2 of the input device 1 illustrated in Fig. 1 is placed in a center console, with an operation surface 3 exposed. Therefore, an occupant of the vehicle can operate the operation surface 3 with a finger (operating body) from either the driver's seat or the passenger's seat. For example, with the input device 1 of the present embodiment, an occupant of the vehicle can remotely perform various operations in a display screen of a car navigation system.

As illustrated in Fig. 1 and Fig. 3, the panel unit 2 included in the input device 1 has the operation surface 3 having a planar portion 5 and a raised portion 6 formed continuously from the planar portion 5. The planar portion 5 is integral with the raised portion 6. As illustrated in Fig. 3, the panel unit 2 is formed, by three-dimensional forming, to be substantially uniform in thickness. There is a raised space on the back side of the raised portion 6.

In the present embodiment, there are the operation surface 3 and an operation region 1a. The operation surface 3 refers to a surface that can be touched, operated from a short distance, or both, by an operating body, such as a finger (operating body) F. Therefore, in the present specification, the phrase "on the operation surface 3" refers not only to being in contact with the operation surface 3, but also to being close to the operation surface 3. On the other hand, the operation region 1a includes a region further above the operation surface 3 (i.e., higher than the position of the above-described operation at a short distance from the operation surface 3), the region being a space that allows detection of an operation position. That is, the operation region 1a includes not only the operation surface 3, but also a spatial region above the operation surface 3.

Although the operation surface 3 has the planar portion 5 and the raised portion 6 in Fig. 1, the operation surface 3 may have the planar portion 5 and a recessed portion, or may have the planar portion 5 and both the raised portion 6 and the recessed portion. Here, the planar portion 5 and the recessed portion, or the planar portion 5 and the raised portion 6, are formed continuously. The planar portion 5 may have a curvature not as large as those of the raised portion 6 and the recessed portion.

As illustrated in Fig. 3, the panel unit 2 includes a light-transmissive sheet 8. For example, the light-transmissive sheet 8 is a polycarbonate (PC) sheet or a polyethylene terephthalate (PET) sheet. In the present embodiment, the term "light-transmissive" refers to transmitting light emitted from at least the photosensor 20. As described below, if the light emitted from the photosensor 20 is infrared light, the light-transmissive sheet 8 needs to transmit infrared light. If the light-transmissive sheet 8 is configured to transmit visible light as well as infrared light, various indications can be displayed on the operation surface 3 (as described below). The determination as to whether the light-transmissive sheet 8 is to be made of material that allows transmission of light other than that emitted from the photosensor 20 is made depending on the application etc.

As illustrated in Fig. 1 and Fig. 3, a plurality of first electrodes 11 and a plurality of second electrodes 12 constituting a capacitive sensor 10 are arranged on a front surface (upper surface) and a back surface (lower surface) of the light-transmissive sheet 8 so as to cross each other. The front surface of the light-transmissive sheet 8 refers to a surface on the Z1 side in Fig. 3, and the back surface of the light-transmissive sheet 8 refers to a surface on the Z2 side in Fig. 3. As illustrated in Fig. 1, the first electrodes 11 extend in the Y direction and are spaced apart in the X direction. On the other hand, the second electrodes 12 extend in the X direction and are spaced apart in the Y direction.

Besides the configuration illustrated in Fig. 1 and Fig. 3, any configuration is possible as long as it allows detection of an operation on the operation surface. For example, a capacitive sensor may be embedded in an operation surface of predetermined thickness by use of a technique, such as an in-mold process.

As illustrated in Fig. 1 and Fig. 3, the light-transmissive sheet 8 is three-dimensionally molded. The first electrodes 11 are formed along the contour of flat and raised portions of the light-transmissive sheet 8 on the front side, while the second electrodes 12 are formed along the contour of flat and raised portions of the light-transmissive sheet 8 on the back side. When first electrodes 11 and the second electrodes 12 are formed along the contour of the light-transmissive sheet 8, it is possible to properly detect the operation position not only when the planar portion 5 of the operation surface 3 is operated, but also when an upper face 6a or a side face 6b of the raised portion 6 is operated.

As illustrated in Fig. 3, a light-transmissive resin layer 15 is molded over the front surface of the light-transmissive sheet 8. The light-transmissive resin layer 15 can be formed, for example, by insert molding (or injection molding). Thus, by molding the light-transmissive resin layer 15 over the light-transmissive sheet 8, it is possible to maintain the strength of the panel unit 2, protect the first electrodes 11, and fill in the gaps between the first electrodes 11 to improve flatness of the operation surface 3. Note here that the term "flatness" refers to flatness of the front surface of the planar portion 5 and the upper face 6a of the raised portion 6. Moreover, when the light-transmissive resin layer 15 is molded over the light-transmissive sheet 8, the photosensor 20 can properly emit and receive light (as described below).

As illustrated in Fig. 3, it is preferable that a coating 21 be formed, for example, by ultraviolet (UV) or self-cure coating on the front surface of the light-transmissive resin layer 15 and the exposed surfaces of the second electrodes 12.

As illustrated in Fig. 3, the photosensor 20 is disposed on a substrate 4 in the lower part (in the Z2 direction) of the panel unit 2. The photosensor 20 includes light-emitting elements 22 and a light-receiving element 23. For example, the light-emitting elements 22 are infrared-emitting diodes, and the light-receiving element 23 is an infrared photodiode. As illustrated in Fig. 2 and Fig. 3, one light-receiving element 23 is disposed below substantially the center of the raised portion 6 of the panel unit 2, while the light-emitting elements 22 are disposed on both sides of the light-receiving element 23 in each of the X and Y directions. The light-emitting elements 22 of the present embodiment illustrated in Fig. 2 are arranged within the frame of the raised portion 6 in plan view. However, as illustrated in Fig. 4, the light-emitting elements 22 may be arranged outside the raised portion 6, that is, below the planar portion 5 of the operation surface 3. The number of light-emitting elements 22 may be either four (see Fig. 2) or two (see Fig. 4). In the present embodiment, the number of the light-emitting elements 22 and the number of the light-receiving element 23 are not limited to particular values. However, if the number of at least the light-emitting elements 22 is more than one, it is possible to detect the operation position (or plane coordinates) of the finger F on the operation surface 3. In particular, as illustrated in Fig. 2, when a plurality of light-emitting elements 22 are arranged in each of the X and Y directions, the photosensor 20 can detect the X and Y coordinates of the finger F. The arrangement of the photosensor 20 illustrated in Fig. 2 is suitable for positional detection of the finger F operating on the upper face 6a of the raised portion 6. For the photosensor 20 to properly detect the operation position of the finger F on the planar portion 5, it is preferable that the light-emitting elements 22 be arranged below the planar portion 5 as illustrated in Fig. 4. The arrangement of the light-emitting elements 22 can be changed in the design process depending on, for example, the shape of the operation surface 3, the application, or the area where detection by the photosensor 20 is most needed.

As illustrated in Fig. 2, Fig. 3, and Fig. 4, a shielding plate 25 is disposed between the light-receiving element 23 and the light-emitting elements 22. With the shielding plate 25, it is possible to improve detection accuracy of the photosensor 20.

In the present embodiment, materials that can transmit infrared light are selected as materials of the light-transmissive sheet 8, the light-transmissive resin layer 15, and the coating 21.

As illustrated in Fig. 3, a connecting portion 28 of the panel unit 2 illustrated in Fig. 1 is electrically connected to an integrated circuit (IC or controller) 30 on the back side of the substrate 4. Wires from the first electrodes 11 and the second electrodes 12 extend to the connecting portion 28 to form a terminal area, which is connected to the IC 30. Although only one connecting portion 28 is illustrated in Fig. 1, there may be one connecting portion for the first electrodes 11 and another for the second electrodes 12.

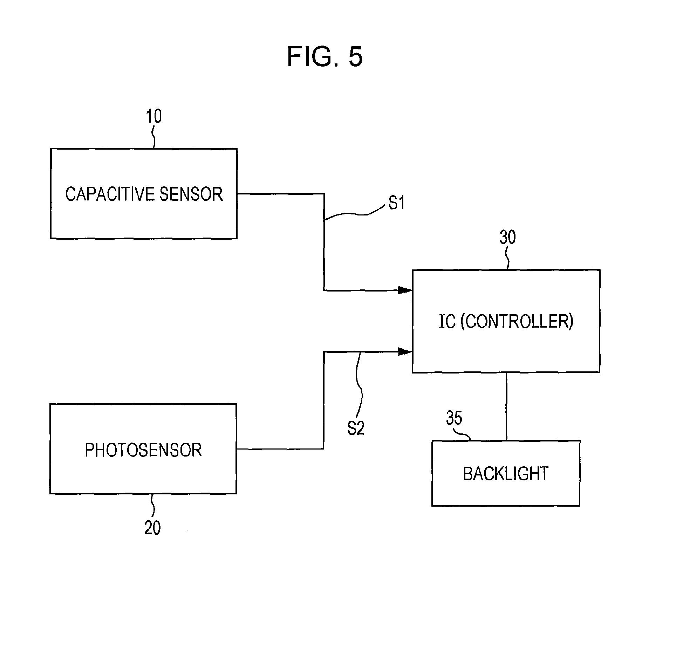

As illustrated in Fig. 5, the capacitive sensor 10 and the photosensor 20 are connected to the IC 30. When the operation surface 3 is operated by the finger F, the capacitive sensor 10 can detect the operation position of the finger F on the basis of a change in capacitance. Then, a detection signal S1 is transmitted from the capacitive sensor 10 to the IC 30.

As illustrated in Fig. 3, when the finger F is located on or above the operation surface 3, infrared light IR1 emitted from the light-emitting elements 22 propagates through a space 27 between the substrate 4 and the panel unit 2. The infrared light IR1 then passes through the light-transmissive sheet 8, the light-transmissive resin layer 15, and the coating 21 and is reflected by the finger F. The resulting reflected light IR2 is received by the light-receiving element 23. Thus, the photosensor 20 detects the finger F and transmits a detection signal S2 to the IC 30.

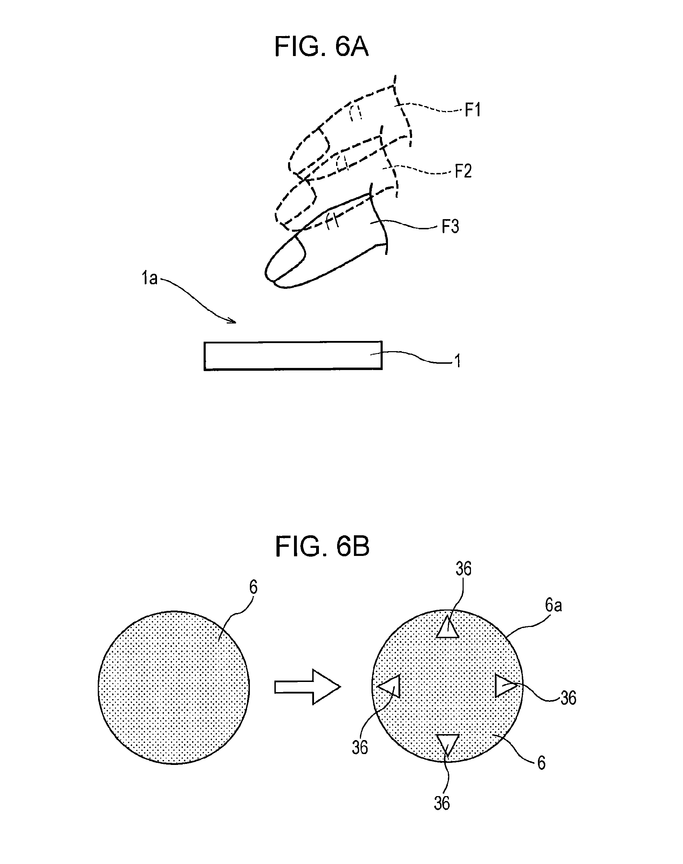

The detection signal S1 from the capacitive sensor 10 can be obtained when the finger F is located either on the operation surface 3 or slightly above the operation surface 3 in the operation region 1a. However, as illustrated in Fig. 6A, if the finger F is located at F1 far above the input device 1 (simplified in Fig. 6A) in the operation region 1a, it is difficult for the capacitive sensor 10 to detect the presence of the finger F. As a result, the capacitive sensor 10 is unable to detect that the finger F is approaching the input device 1 in the order of F1, F2, and F3 as illustrated in Fig. 6A.

On the other hand, even if the finger F is so far above the operation surface 3 that it is difficult for the capacitive sensor 10 to detect it, the photosensor 20 of the present embodiment can detect the presence of the finger F and transmit the detection signal S2 indicating that the finger F is approaching the input device 1 in the order of F1, F2, and F3, as long as infrared light from the light-emitting elements 22 can be reflected by the finger F and the reflected light from the finger F can be received by the light-receiving element 23 (i.e., as long as the finger F is located in the operation region 1a in the present embodiment). If the finger F is not located above the raised portion 6 of the operation surface 3, nothing is displayed in the raised portion 6 as illustrated in the left part of Fig. 6B. However, if the photosensor 20 detects that the finger F is in the operation region 1a and is approaching the input device 1 in the order of F1, F2, and F3, or that the finger F has reached the position of F3 close to the input device 1, the IC 30 detects (or predicts) that the finger F will shortly start operation on the operation surface 3. Then, before the finger F reaches the operation surface 3, the IC 30 may turn on a backlight 35 (see Fig. 5) to illuminate a predetermined operation indicator 36 on the upper face 6a of the raised portion 6, as illustrated in the right part of Fig. 6B. For example, the panel unit 2 may include a decorative print layer (described below) that transmits infrared light but blocks visible light. When the backlight 35 is on, the light passes through the operation indicators 36 where no decorative print layer is present. This makes it possible to properly illuminate the operation indicators 36. Alternatively, a liquid-crystal display may be provided for switching an image displayed on the operation surface 3.

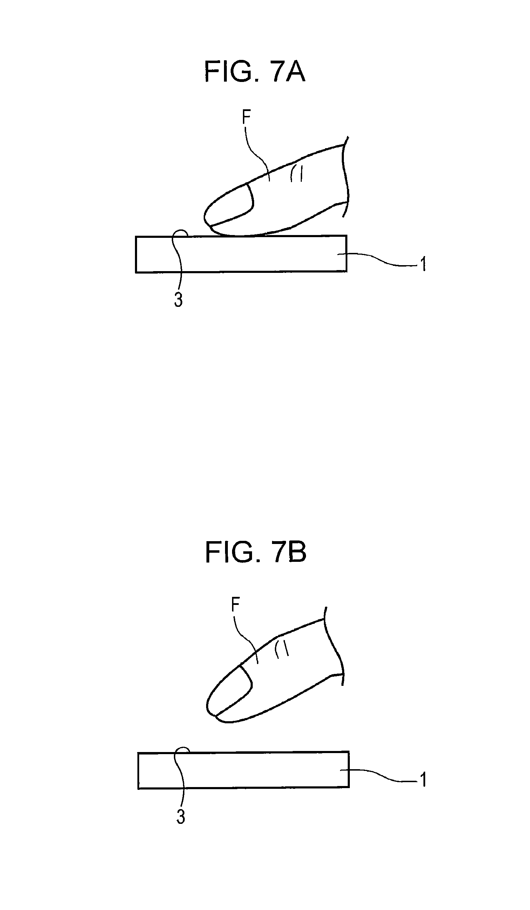

In the present embodiment, as illustrated in Fig. 7A, while the finger F is being placed on the operation surface 3 for operating the input device 1 (simplified in Fig. 7A), the operation position of the finger F is indicated by the detection signal S1 from the capacitive sensor 10.

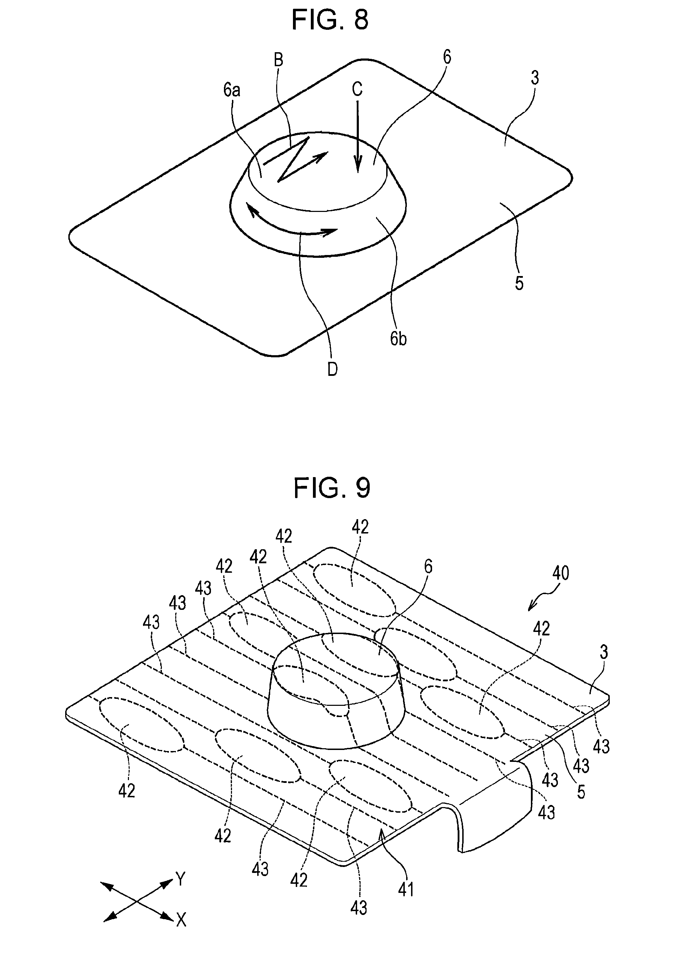

For example, the upper face 6a and the side face 6b of the raised portion 6 of the operation surface 3 can be operated as indicated by arrows B, C, and D in Fig. 8, and the operation position of the finger F can be determined by the capacitive sensor 10. While not shown in Fig. 8, the capacitive sensor 10 extends below the planar portion 5 around the raised portion 6 (see Fig. 1). Therefore, the operation position of the finger F on the planar portion 5 can also be determined on the basis of the detection signal S1 from the capacitive sensor 10.

In the present embodiment, when the finger F on the operation surface 3 of the input device 1 (see Fig. 7A) is moved off the operation surface 3 and becomes so far from the operation surface 3 that the capacitive sensor 10 can no longer detect the finger F (see Fig. 7B), the capacitive sensor 10 stops transmitting the detection signal S1 to the IC 30. However, as long as the finger F is located in the operation region 1a where the photosensor 20 can detect the finger F, detection information indicating detection of the finger F can be obtained from the photosensor 20. Thus, a maximum detectable distance of the photosensor 20 is longer than that of the capacitive sensor 10, the maximum detectable distance being a maximum distance to which a point of operation on the operation surface 3 can be detected. The photosensor 20 can detect at least a distance between the finger F and the operation surface 3. In other words, the photosensor 20 can detect at least the position of the finger F in the height (Z) direction.

On the basis of the detection signal S2 from the photosensor 20, the IC 30 determines that the finger F is still located within the range of operation. Thus, even when the detection signal S1 is not transmitted from the capacitive sensor 10, the IC 30 can easily maintain the previous input and mode displayed on the screen of the car navigation system.

For example, while the operation illustrated in Fig. 8 is being performed during running of the vehicle, the finger F may be accidentally moved off the operation surface 3 by vibration, as illustrated in Fig. 7B. Here, the operator has an intention to continue the operation. If the photosensor 20 can detect the finger F and the IC 30 determines that the finger F is present within a predetermined distance, the operator can continue the operation and enjoy user-friendliness.

As described above, the distance of the finger F from the operation surface 3 can be determined on the basis of the detection signal S2 from the photosensor 20. On the other hand, the distance of the finger F from the operation surface 3 cannot be, or cannot accurately be, determined on the basis of the detection signal S1 from the capacitive sensor 10. Therefore, when the detection signal S2 from the photosensor 20 is used as a complement to the detection signal S1 from the capacitive sensor 10, it is possible to correct the coordinates (X, Y, Z) of the operation position of the finger F and achieve high accuracy in detecting the position of the finger F.

When the plurality of light-emitting elements 22 are used as illustrated in Fig. 2, infrared light is sequentially emitted from the light-emitting elements 22 and their reflected light is received by the light-receiving element 23. The operation position (X, Y) of the finger F within the operation surface 3 can thus be determined on the basis of the intensity of each infrared light received. When the detection signals S1 and S2 are received from the capacitive sensor 10 and the photosensor 20, the IC 30 determines the operation position (X, Y) of the finger F on the basis of, for example, the detection signal S1 from the capacitive sensor 10. Even in this case, the detection signal S2 from the photosensor 20 can be used as a complement to obtain the coordinate of the finger F in the height (Z) direction. If the capacitive sensor 10 is unable to detect the operation position of the finger F when, for example, the finger F is gloved, it is possible to determine the operation position (X, Y) of the finger F on the basis of the detection signal S2 from the photosensor 20. In the structure of related art which includes only the capacitive sensor 10, it is necessary that the glove be taken off. In the present embodiment, however, the photosensor 20 can detect the operation position of the finger F in a glove. It is thus possible to provide improved user-friendliness.

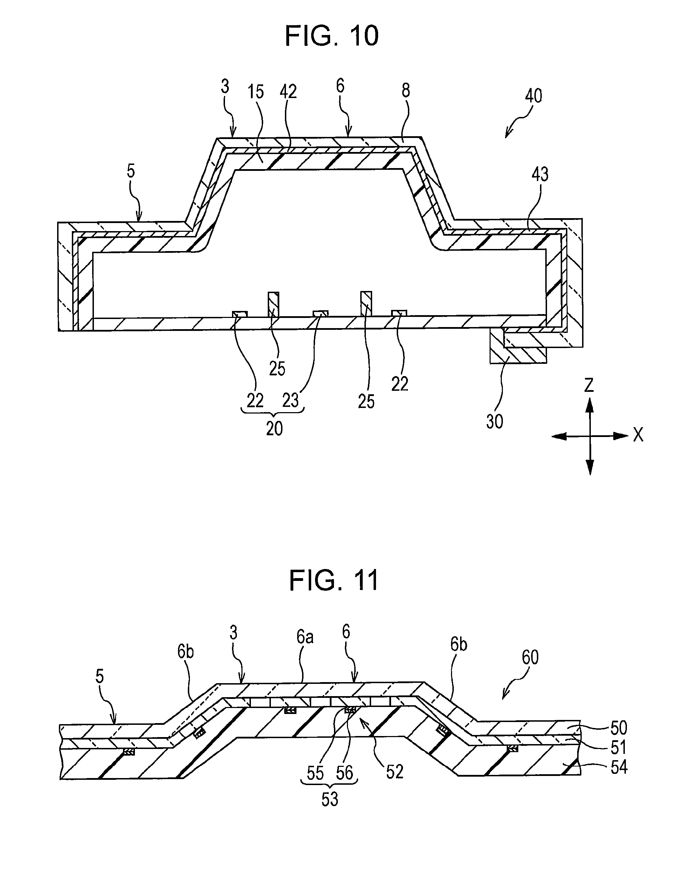

Fig. 9 is a perspective view of a panel unit included in an input device according to an embodiment different from that of Fig. 1. Fig. 10 is a vertical cross-sectional view of the input device including the panel unit illustrated in Fig. 9.

In Fig. 9 and Fig. 10, components identical to those illustrated in Fig. 1 and Fig. 3 are given the same reference numerals.

In an input device 40 illustrated in Fig. 9 and Fig. 10, a plurality of electrodes 42 constituting a capacitive sensor 41 are formed only on the back surface (lower surface) of the light-transmissive sheet 8. As illustrated in Fig. 9, for example, the electrodes 42 are substantially oval in shape. Each of the electrodes 42 is provided with thin wiring portions 43 extending on both sides thereof in the X direction. The electrodes 42 connected to their corresponding wiring portions 43 adjacent in the Y direction are displaced from each other in the X direction. This is to prevent the electrodes 42 from facing each other in the Y direction.

As illustrated in Fig. 10, the light-transmissive resin layer 15 is molded on the back side of the light-transmissive sheet 8. The operation surface 3 may be provided with the coating 21, which is not illustrated in Fig. 10. As illustrated in Fig. 10, the configuration of the photosensor 20 is the same as that illustrated in Fig. 1.

Even with the configuration of the capacitive sensor 41 illustrated in Fig. 9 and Fig. 10, capacitive coupling occurs between the finger F and an electrode 42 close to the finger F, and the detection signal S1 can be obtained on the basis of a change in capacitance.

The configuration of the capacitive sensor may be different from those illustrated in Fig. 1 and Fig. 10.

In any embodiment described herein, the capacitive sensor or the photosensor can detect the operator's hand and arm, as well as a finger, in detecting the operation, thereby recognizing whether the operation is being performed from either the driver's seat or the passenger's seat. The photosensor is particularly suitable for this detection, because of its maximum detectable distance longer than that of the capacitive sensor. Different operation items of the input device may be automatically displayed depending on whether the operation is being performed from the driver's seat or the passenger's seat. It is thus possible to provide improved user-friendliness.

Fig. 11 to Fig. 15 each illustrate a partial cross-sectional view of a panel unit. In Fig. 11 to Fig. 15, layers denoted by the same reference numerals represent the same components.

In a panel unit 60 illustrated in Fig. 11, a decorative print layer (symbol print layer) 51 is formed on the back surface (lower surface) of a light-transmissive sheet 50 which is a PC sheet or a PET sheet. Electrodes 53 constituting a capacitive sensor 52 are formed on the back surface (lower surface) of the decorative print layer 51. Alternatively, the decorative print layer 51 and the electrodes 53 may be formed on one and the other surfaces of the light-transmissive sheet 50.

In the panel unit 60 of Fig. 11, a light-transmissive resin layer 54 is molded on the back side of the light-transmissive sheet 50.

Like the panel unit illustrated in Fig. 9, the panel unit 60 of Fig. 11 has a configuration in which the electrodes 53 constituting the capacitive sensor 52 are formed on only one side of the light-transmissive sheet 50.

A method for making the panel unit 60 will now be described. First, the decorative print layer 51 is formed on the light-transmissive sheet 50, for example, by screen printing or digital printing. Next, a conductive print layer 55 forming the electrodes 53 is screen-printed on the light-transmissive sheet 50. Polypyrrole (PPY) may be used to form the conductive print layer 55. Next, the planar portion 5 and the raised portion 6 of the operation surface 3 are formed by three-dimensional forming (or vacuum pressure molding). Then, a plating layer 56 is formed on the conductive print layer 55 by electrolytic plating or non-electrolytic plating. The electrical resistivity of the plating layer 56 is lower than that of the conductive print layer 55. This can reduce the resistivity of the electrodes 53, which are formed by lamination of the conductive print layer 55 and the plating layer 56.

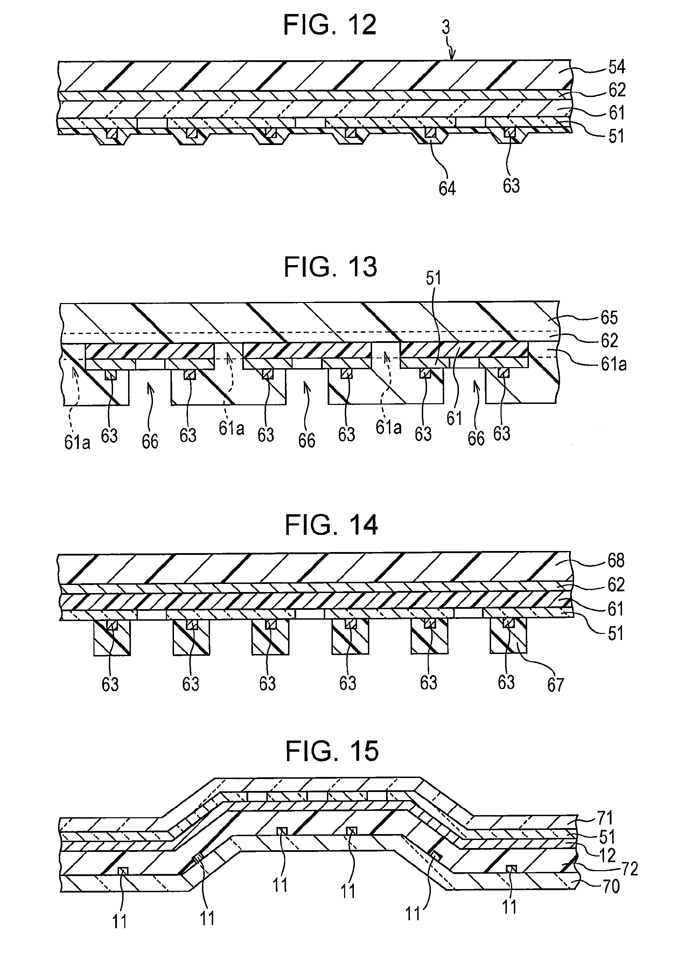

When the electrodes 53 (or conductive print layer 55) are formed by printing, the three-dimensional forming can be carried out properly and the electrodes 53 can be placed along the three-dimensional contour, as illustrated in Fig. 11. Thus, not only when the planar portion 5 of the operation surface 3 is operated, but also when the upper face 6a or the side face 6b of the raised portion 6 is operated, the capacitive sensor 52 can properly detect the operation position. Although electrodes are illustrated as having a single-layer structure in Fig. 12 to Fig. 15, it is preferable that they have a double-layer structure as in Fig. 11.

After the outer surface of the panel unit 60 formed as described above is trimmed by a press, the light-transmissive resin layer 54 is formed by insert molding. Last, a coating (not shown in Fig. 11) is formed, for example, by UV or self-cure coating as necessary.

The light-transmissive sheet 50, the light-transmissive resin layer 54, and the decorative print layer 51 are made of materials that transmit infrared light, which is emitted and received by the photosensor 20. If the photosensor 20 emits and receives light having a wavelength different from that of infrared light, it is necessary that materials that transmit the light having this wavelength be used to form the light-transmissive sheet 50, the light-transmissive resin layer 54, and the decorative print layer 51. Visible light does not pass through the decorative print layer 51, but passes through the light-transmissive sheet 50 and the light-transmissive resin layer 54. For example, as described with reference to Fig. 6B, the operation surface 3 is in a non-display state (see the left part of Fig. 6B) when the backlight 35 is off. When the backlight 35 is on, light passes through the light-transmissive sheet 50 and the light-transmissive resin layer 54. The light does not pass through portions where there is the decorative print layer 51. However, the light passes through light-transmitting portions having the shape of the operation indicators 36 and located on the same layer as the decorative print layer 51. Thus, only the operation indicators 36 can be illuminated as viewed from the operation surface 3.

The display on the operation surface 3 can be changed by varying the shape of the decorative print layer 51 in plan view.

In the panel unit illustrated in Fig. 12, electrodes 62 and 63 constituting a capacitive sensor are formed on both sides of a light-transmissive sheet 61. As illustrated in Fig. 12, there is a coating 64 that protects exposed surfaces of the electrodes 63 on the back side of the light-transmissive sheet 61. The panel unit of Fig. 12 is made in accordance with the method described with reference to Fig. 11.

In the panel unit of Fig. 12, the operation surface 3 is entirely flat. This means that three-dimensional forming is not performed here. Like the operation surface 3 illustrated in Fig. 12, the operation surfaces illustrated in Fig. 13 and Fig. 14 may be entirely flat.

In the panel unit illustrated in Fig. 13, after through holes 61a are formed in the light-transmissive sheet 61, a light-transmissive resin layer 65 is molded using a mold. In the molding, the cavity of the mold is filled with resin. Then, the resin is injected through the through holes 61a to the core of the mold. Thus, the light-transmissive resin layer 65 can be molded on the front and back surfaces of the light-transmissive sheet 61 as illustrated in Fig. 13. Reference numeral 66 denotes a shutoff portion. The panel unit of Fig. 13 is made in accordance with the method described with reference to Fig. 11.

As illustrated in Fig. 14, light-transmissive resin layers 67 and 68 may be two-color molded. The panel unit of Fig. 14 is made in accordance with the method described with reference to Fig. 11.

In the panel unit illustrated in Fig. 15, for example, the first electrodes 11 are formed on a first light-transmissive sheet 70, while the decorative print layer 51 and the second electrodes 12 are formed on a second light-transmissive sheet 71. As illustrated in Fig. 1, the first electrodes 11 are spaced apart in the X direction, while the second electrodes 12 are spaced apart in the Y direction. With the first electrodes 11 and the second electrodes 12 facing each other, a light-transmissive resin layer 72 is molded between the first light-transmissive sheet 70 and the second light-transmissive sheet 71. The panel unit of Fig. 15 is made in accordance with the method described with reference to Fig. 11.

Although the input devices of the foregoing embodiments are vehicle-mounted input devices, they may be other types of input devices. They are, however, particularly suitable for use as vehicle-mounted input devices.

## Claims

1. An input device (1, 40) comprising:
an operation region (1a) configured to be operated by an operating body (F);
a capacitive sensor (10, 41, 52) disposed below the operation region, the capacitive sensor being capable of detecting an operation position of the operating body; and
a photosensor (20) having a light-emitting element (22) and a light-receiving element (23) disposed below the operation region, the photosensor being capable of obtaining detection information when the light-receiving element receives reflected light (IR2) corresponding to light (IR1) emitted from the light-emitting element toward the operation region, the detection information indicating detection of the operating body.

2. The input device according to Claim 1, wherein the operation region has an operation surface (3) configured to be touched, operated from a short distance, or both;
at least the light-emitting element is provided in plurality; and
the photosensor is capable of detecting the operation position of the operating body above the operation surface.

3. The input device according to Claim 1 or 2, further comprising a panel unit (2, 60) including
a light-transmissive sheet (8, 50, 61, 70, 71) capable of transmitting light from the light-emitting elements and the reflected light, and
electrodes (11, 12, 42, 53, 62, 63) constituting the capacitive sensor and disposed on one or both sides of the light-transmissive sheet,
wherein the operation surface serves as a front surface of the panel unit, and the photosensor on a substrate (4) is disposed in a lower part of the panel unit.

4. The input device according to Claim 3, further comprising a light-transmissive resin layer (15, 54, 65, 67, 68, 72) capable of transmitting light from the light-emitting elements and the reflected light, the light-transmissive resin layer being molded on the light-transmissive sheet.

5. The input device according to Claim 3 or 4, further comprising a decorative print layer (51) capable of transmitting light from the light-emitting elements and the reflected light, the decorative print layer being formed on the light-transmissive sheet.

6. The input device according to any of Claims 3 to 5, wherein the electrodes constituting the capacitive sensor are formed by printing on the light-transmissive sheet.

7. The input device according to Claim 6, wherein the electrodes are formed by lamination of a conductive print layer (55) and a plating layer (56) having resistivity lower than that of the conductive print layer.

8. The input device according to any of Claims 2 to 7, wherein the operation surface has a planar portion (5) and a raised portion (6) formed continuously from the planar portion, a recessed portion formed continuously from the planar portion, or both the raised portion and the recessed portion; and
below the operation surface, the capacitive sensor is formed along the contour of the planar portion and the raised portion, the recessed portion, or both the raised portion and the recessed portion.

9. The input device according to any of Claims 2 to 8, wherein a maximum detectable distance of the photosensor is longer than that of the capacitive sensor, the maximum detectable distance being a maximum distance to which a point of operation on the operation surface can be detected.

10. The input device according to Claim 9, wherein if the operating body is located beyond the maximum detectable distance of the capacitive sensor, the detection of motion of the operating body is carried out on the basis of detection information from the photosensor.

11. The input device according to any of Claims 2 to 10, wherein predetermined information is displayed on the operation surface on the basis of detection information from the photosensor.

12. The input device according to Claim 11, wherein if the photosensor detects that the operating body distant from the operation surface has approached the operation surface by a predetermined distance, the predetermined information is displayed on the operation surface.

13. The input device according to any of Claims 1 to 12, wherein detection information from the photosensor, the detection information indicating detection of the operating body, is used as a complement when positional detection of the operating body is being carried out by the capacitive sensor.
